# EUROPEAN PATENT APPLICATION

(11) **EP 4 757 106 A1**
(43) Date of publication of application: **10.06.2026**
(21) Application number: 23947445.5
(22) Date of filing: 31.07.2023
(51) Int. Cl.: H02J 7/00, H02J 7/04

(54) **METHOD FOR BATTERY CHARGING MANAGEMENT**

(71) Applicant: Adames, Fernando Emilio, Santo Domingo 10135 (DO)
(72) Inventor: Adames, Fernando Emilio, Santo Domingo 10135 (DO)
(74) Representative: Herrero & Asociados, S.L.
(86) International application number: PCT/DO2023/050001
(87) International publication number: WO 2025/026518

(57) **Abstract**

The invention proposes a method for charging batteries or battery packs of the type that uses a charger connected to a power source and to a battery pack, where the charging process is managed by a battery management system (BMS), which allows the execution of a charging process that delivers up to 98.5% of the required charge, which is divided into two stages in which a complete charging cycle is executed in up to seven dynamic mini-charging cycles with micro-stops, allowing the batteries to be charged in less than ten minutes, with controlled temperatures during charging, without compromising the service life of the batteries.

## Description

### FIELD OF THE INVENTION

The present invention relates to a method for managing battery or battery pack charges through the use of dynamic mini-charge cycles, allowing up to 98.5% of the charge to be delivered in periods of less than 10 minutes without compromising the useful life of the batteries.

### BACKGROUND OF THE INVENTION

Batteries are devices designed to store electrical energy. In general terms, they are composed of electrochemical cells capable of converting the chemical energy stored inside them into electrical energy. Thus, batteries store direct current and, in this way, serve to power different electrical circuits or electronic devices, depending on their size and power. Batteries are fully integrated into our daily lives, from flashlights, remote controls, cell phones, tools, appliances, and electric cars, to name just a few examples where they are widely used.

The main innovative efforts in the field of batteries have been aimed at improving their storage capacity, increasing their autonomy, and improving the performance of the different types of batteries known. In particular, with the rise and widespread use of laptops, cell phones, and more recently with the advent of electric vehicles, there has been a need to reduce the charging times required to replenish the charge of batteries, generally lithium-ion batteries, which are used in these types of devices because they offer numerous advantages, including higher energy density, greater efficiency, and a longer life cycle.

As a result of these requirements, aimed at improving battery performance, there has been extensive innovation in battery chargers and battery management systems (BMS), as an intelligent component responsible for the control and advanced management of the storage system, playing a crucial role in terms of safety, performance, charging rates, and longevity. Therefore, we cannot discuss advances in battery capacity and management without mentioning the important role that battery management systems (BMS) have played and will continue to play, especially in efforts to mass-market electric vehicles, which require better and more efficient methods and systems for managing and supplying battery charges, reducing charging times, increasing autonomy, performance, and efficiency, without causing damage or compromising battery life.

The state of the art includes various methods and systems for supplying charge to battery packs, such as those used in electric vehicles. In general terms, these charging systems or methods involve a charger connected to a power source, a battery pack, and a battery management system (BMS). In patent application CN112002952(A), filed by applicant ZHEJIANG YAT ELECTRIC APPLIANCE CO LTD, a method for managing a battery pack is provided, which sequentially comprises the steps of obtaining a protection voltage value, recording the number N of charge or discharge cycles, comparing the number N of cycles with a preset number M of cycles, and changing the charge or discharge voltage value of the battery pack. Although the method allows the charging or discharging voltage applicable to the battery pack to be configured, the process continues to be a process of complete and continuous charging and discharging cycles. In this same vein, the teachings provided by patent WO2023080457, filed by LG ENERGY SOLUTION LTD, are known, which describes a battery charging method and a system for charging a plurality of battery packs connected in parallel with a charger, the battery system comprising a battery that includes a plurality of battery packs, each of which includes a battery module that includes a plurality of battery cells and a voltage sensor for measuring the voltages of the pack, which are voltages at both ends of the battery module; and a master BMS that sets a plurality of voltage sections using the lowest pack voltage value among a plurality of pack voltages and a reference voltage value, These teachings coincide with the known state of the art, where charging processes are predominantly executed in the form of complete and continuous charging cycles. This is a serious limitation in the battery charging process, which does not allow for the proper handling and management of battery charging, nor does it allow for reduced charging times without affecting the useful life of the batteries.

In general terms, these state-of-the-art systems have a number of drawbacks, among which the following stand out:
The chargers and battery management systems (BMS) currently in use are designed to perform complete charging cycles, which causes overheating in batteries reduces their useful life, achieving charge cycles with maximum performance between 20% and 80% of the charge in no less than 45 minutes. These BMS are designed to provide complete high-voltage fast charge cycles, so that when charging, they do not split the charge and send it as a complete and continuous charge cycle.

These systems cause the batteries to overheat, significantly reducing their useful life, and also cause the charger cable to overheat, so they must be equipped with a cooling system.

Another important limitation of known charging systems is that when the battery has consumed 80% of its cycles, according to the manufacturer, the BMS prevents the fast-charging process and proceeds with normal charging, requiring more than 45 minutes to complete a charging cycle. Similarly, they have the limitation that when the batteries to be charged are cold, in order to start the charging process, the battery temperature must first be raised to levels ranging from 35 degrees to 41 degrees Celsius, for example, by turning on the vehicle's heater, which requires energy from the batteries, sometimes generating energy deficits that prevent the heater from operating. Finally, they have the disadvantage of being limited to charging lithium batteries, and when there is a charge imbalance between the cells or batteries in a battery bank because some of them have been charged more than others, this causes the batteries to overheat, which, when detected by the BMS, leads to the disconnection of the entire block to which the battery or batteries in question belong, making the charging process more inefficient and requiring more time to complete the charging cycle.

### BRIEF DESCRIPTION OF THE INVENTION

Therefore, an object of this invention is a method for managing and supplying charges applicable to any type of battery, and particularly applicable to lithium batteries.

An object of the present invention is a method for managing and supplying battery charges that divides a charging cycle into dynamic mini cycles of high power and low voltage.

Another object of the present invention is a method for managing and supplying battery charges whereby the charger can recognize a battery pack, that has been previously charged, to configure a new charging process tailored to the battery pack.

Furthermore, another object of the present invention is a method for charging batteries that guarantees fast charging cycles from 0% to 98.5% charge in less than 10 minutes, without generating overheating or damage that could impair or reduce the useful life of the batteries.

### BRIEF DESCRIPTION OF THE DRAWINGS

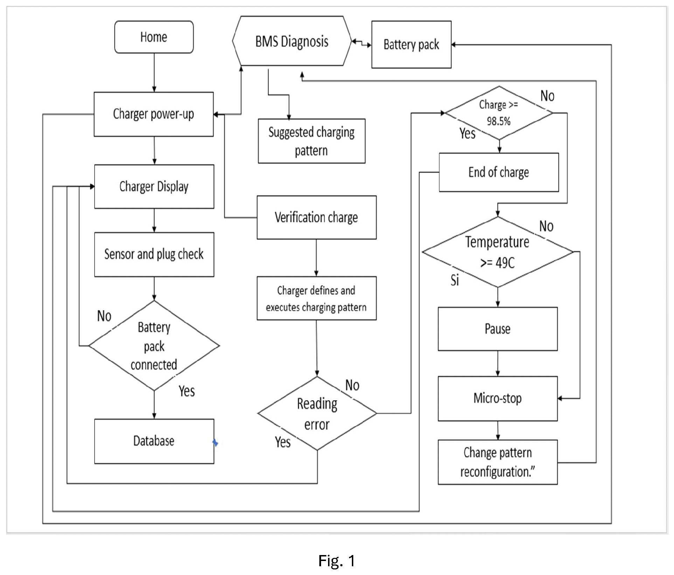

In the drawings, Figure 1 is a diagram detailing the charging method of the present invention.

### DETAILED DESCRIPTION OF THE INVENTION

The details of the present invention will now be described in conjunction with the illustration provided by the drawing of the charging method in question for a better understanding thereof. However, an average expert in the field will understand that, based on what is disclosed herein and the drawing accompanying the description, obvious improvements can be made to the technical rule disclosed; however, such additions, modifications, and applications do not depart from the scope of this invention.

The charging method of the present invention allows dynamic mini-charging cycles to be executed, controlled, and managed from a battery charger to a battery pack through a battery management system (BMS), where the charger manages a database through artificial intelligence (AI) to store and update information regarding each battery pack and its previous charging processes.

The steps of the charging method are illustrated in Figure 1 and begin with the activation of a charger which, once activated, connects to a BMS and a battery pack, at which point the charger immediately surveys and retrieves the sensor values and determines whether or not the terminals are connected to the plug, displaying the information it collects on a display.

Once the charger is turned on, it communicates with the battery management system (BMS), which performs a general diagnosis to determine how the battery pack to which the charger is connected is configured and what the state of the charge levels is, the temperature of each battery module that makes up the pack, and whether the temperature of the batteries is equal to or lower than the ambient temperature, as well as determining the capacity of the batteries to receive a full charging cycle. Based on this diagnosis, the BMS establishes a suggested charging pattern by estimating how much current the charger should supply to the batteries that make up the pack, proposes the charging packages, and estimates how much charging time is necessary, and how many mini-charge cycles are required to complete a full charge cycle for that particular battery pack. The charger then stores the information collected by the battery pack's BMS in a database in order to individualize the battery pack and be able to identify it in subsequent customized charges in accordance with the particular profile of each battery pack.

Once the charging pattern suggested by the BMS has been received, based on the diagnosis performed, the charger sends verification charges to the battery pack to reconfirm the suggested charging pattern. If the suggested charging pattern is correct, the charger executes the charging process, starting by leveling the charge in the batteries that make up the pack and initiating the suggested charging process by dividing a charging cycle into 7 or fewer dynamic mini-charging cycles, in high-power, low-voltage charging packages, in a charging time that in no case will exceed ten minutes. If the charging pattern suggested by the BMS is not correct, the charger establishes the charging pattern, defining how many mini-charging cycles are initially required and how much charging time is to be used to deliver the charge to the battery pack, thus completing one full charge cycle in no more than ten minutes, dividing the charge cycle into seven or fewer mini-cycles of dynamic charges with micro-stops, dynamically updating the battery pack information in its database for future charging processes.

The charging process consists of two stages or blocks of dynamic charges. In the first charging voltage stage, the charger delivers charge packets divided into seven or fewer dynamic mini-charge cycles, delivering 0 to 80% of the charge set for the battery pack. During this stage, the charger periodically reconfirms how many mini-cycles or charging rates are needed to complete 0-80% of the charge and the time required to do so, reconfiguring the charging process each time, determining in each reconfirmation the mini-cycles, the micro-stops that will be necessary, and the remaining charging time to complete the delivery of the energy packets until 80% of the charge defined for the first stage is reached. During this stage, the charger must overcome, with each charge packet, the resistance presented by the batteries when receiving the charge.

The second stage or charging block begins after the battery pack has received 80% of the charge. This stage is known as the completion and float voltage stage, and during this stage, the charger is configured to complete the charging process until approximately 98.5% of the charge that the battery pack can receive, as defined by the manufacturer, is delivered, in order to avoid reducing the battery's useful life, constantly reconfiguring the mini-charging cycles, micro-stops, and delivery time needed to complete this stage and with it, complete a charging cycle.

During the supply of charge in the first and second stages, the charger constantly checks the temperature of the batteries. If the temperature reaches 49 degrees Celsius, as shown in Figure 1, then pauses and micro-stops are executed during which the charging process is stopped, the batteries are cooled, and the charging pattern or energy package to be delivered is reconfigured, redefining the mini-charging cycles and the estimated remaining charging time, and the data corresponding to the pack in question is updated and stored in the database.

The micro-stops serve as references for the charger, from the BMS, so that the charging times can be adjusted and the batteries that make up the pack are not damaged by the increase in temperature during the charging process. The charger, in accordance with the temperature of the battery pack, constantly repeats micro-stops during which the batteries cool down and adjustments are made to the charging process in accordance with the diagram in Figure 1.

The database where all the information on the battery pack and the incidents and updates of all its charging processes is stored is managed by the charger through an artificial intelligence (AI) algorithm. Therefore, each time a previously charged battery pack is reconnected to the charger, and when the BMS performs the initial diagnosis, the charger will be able to determine that it is a battery pack that it has charged on other occasions. In this way, the charger can perform a new, more specific and efficient charging process, tailored to the battery pack, as it has stored in its database all the characteristics of the pack and its behavior in previous charging processes. For example, the charger will have information on how many mini cycles of dynamic charges and how many micro-stops were necessary in previous charging processes, what was the temperature of the battery pack at each stage of the charging process (first stage of charging and second stage of final voltage and float), and how long reached 80% of the charge (first stage or charging stage) and how long it took to reach 98.5% of the charge (second stage or end-of-charge and float voltage stage), how long it took to complete a full charge cycle, thus providing a very accurate diagnosis of the pack when establishing the capacity of the batteries to receive a new full charge cycle; more accurately estimating the charge packets that must be sent to the batteries that make up the pack at each stage of charging, the mini-cycles of dynamic charging into which the new charge cycle will be divided, the temperature levels experienced by the battery pack at each stage of charging, and the estimated time in which a complete charging cycle will be executed for the pack in question. In this way, and as a result of repeating charging cycles, the charger learns about the pack that has been charged on other occasions, allowing for a customized charging process for each battery pack.

If, at the start or during the charging process, the BMS detects inconsistencies or reading errors such as temperature errors, connection errors, unbalanced batteries, damaged battery blocks, voltage reading errors, among others, the charger establishes the nature of the error and determines whether to continue or stop the charging process, depending on the nature of the error detected. all this in order to achieve an efficient charging process or to stop the charging process if it is an error for which the charger does not have a predetermined solution or which could compromise the useful life of the batteries that make up the pack.

Among the most commonly detected reading errors are high temperature in the battery bank (above 49 degrees Celsius), low temperature in the battery bank when below 0 degrees Celsius, cable disconnected from the connector, charger cable with high temperature above 50 degrees Celsius, error in charging time pauses, errors in the placement of charging blocks, damage to batteries, modifications due to changes or repairs to the battery pack, among other information and readings that are shown on the charger display.

## Claims

1. Method for managing battery charges of the type that uses a charger connected to a power supply, a battery management system (BMS), and a battery pack, wherein the method comprises the steps of:
Turning on a charger to perform a survey and retrieve sensor values, and determining whether the terminals are connected to the plug,
Performing a diagnosis through a battery management system (BMS) to determine the configuration of the battery pack, the charge levels present in the batteries that make up the pack, the temperature of the batteries, and the capacity of the batteries to receive a full charge cycle, to establish a high-power, low-voltage charging pattern to be supplied by the charger to the batteries that make up the pack, where the BMS assigns the charging packages and establishes the necessary charging time and the number of mini-charging cycles required to complete a full charging cycle,
Sending verification charges through the charger to the battery pack to establish that the charging pattern suggested by the BMS is correct,
Execution by the charger of the charging pattern suggested by the BMS when it is correct, leveling the charge in the batteries and executing the suggested charging pattern in two stages or blocks of high-power, low-voltage dynamic charges, divided into mini-cycles of dynamic charges with micro-stops that are completed in no more than ten minutes,
If the charging pattern suggested by the BMS is not correct, the charger levels the charge in the batteries and directly executes a two-stage charging process or blocks of high-power, low-voltage dynamic charges, directly establishing the charge packages, mini-charge cycles, and charging time necessary to complete a full charge cycle divided into mini-cycles of dynamic charges with micro-stops that complete in no more than ten minutes,
Store the information collected by the BMS for each battery pack in a database, allowing each previously charged battery pack to be recognized and enabling specific future charges to be configured for each battery pack,
Display the charging process and battery status on a charger display.

2. The method of claim 1, wherein a complete charging cycle is divided and executed in seven or fewer high-power, low-voltage mini-charging cycles.

3. The method of claim 1, wherein in the first dynamic charging voltage stage or block, the charger delivers 0 to 80% of the charge divided into charge packets of seven or fewer dynamic charging mini cycles.

4. The method of claim 3, wherein the charger, during the voltage stage or block, periodically reconfirms the mini-cycles or charge rates needed to complete the charge stage or block and the time required, reconfiguring the charging process, establishing the mini-cycles, the micro-stops that will be necessary, and the remaining charge time to complete the delivery of the remaining energy packets, until 80% of the charge is reached.

5. The method of claim 1, wherein in the completion and/or float voltage stage, the charger completes the charging process for the delivery of up to 98.5% of the charge, dividing the charge packet into seven or fewer dynamic mini-charge cycles.

6. The method of claim 5, wherein the charger, during the completion and/or float voltage stage, periodically reconfigures the charging process, establishing the mini cycles, the necessary micro-stops, and the remaining charging time to complete this stage and thereby complete a charging cycle.

7. The method of claim 1, comprising micro-stops during which the charging process is stopped, the batteries are cooled, the power package to be delivered is reconfigured, the required mini-charge cycles are defined or reconfirmed, and the estimated remaining charge time is defined.

8. The method of claim 1, wherein the temperature present in the batteries during the execution of the stages of the charging process determines the performance of micro-stops in the charging process when the temperature is equal to or greater than 49 degrees Celsius.

9. The method of claim 1, comprising updating and storing in a database the information, status, and parameters corresponding to the battery pack and its behavior during the execution of each charging process, for the individualized supply of new charging processes.

10. The method of claim 1, wherein the BMS detects inconsistencies in the charging process, temperature reading errors, connection errors, unbalanced batteries, damaged battery packs, or voltage reading errors, so that the charger determines whether to continue or stop the charging process based on the nature of the error.

11. The method of claim 1, wherein incidents in the execution of the charging process of a battery pack are shown on the charger display.
